# EUROPÄISCHE PATENTSCHRIFT

(11) **EP 1 123 526 B1**
(45) Veröffentlichungstag und Bekanntmachung des Hinweises auf die Patenterteilung: **24.07.2002**
(21) Anmeldenummer: 98965838.0
(22) Anmeldetag: 15.12.1998
(51) Int. Cl.: G02B 26/08

(54) **MIKROMECHANISCHES BAUELEMENT MIT SCHWINGKÖRPER**
MICROMECHANICAL COMPONENT COMPRISING AN OSCILLATING BODY
COMPOSANT MICROMECANIQUE A CORPS OSCILLANT

(30) Priorität: 28.10.1998 DE 19849725
(43) Veröffentlichungstag der Anmeldung: 16.08.2001
(73) Patentinhaber: Fraunhofer-Gesellschaft zur Förderung der angewandten Forschung e.V., 80636 München (DE)
(72) Erfinder: SCHENK, Harald, D-01127 Dresden (DE); DÜRR, Peter, D-01099 Dresden (DE); KÜCK, Heinz, D-01465 Langebrück (DE)
(74) Vertreter: Schoppe, Fritz, Dipl.-Ing.
(86) Internationale Anmeldenummer: EP9808204
(87) Internationale Veröffentlichungsnummer: WO0025170

(56) Entgegenhaltungen:
- WO-A-99/32919
- DE-A- 4 224 601
- GB-A- 2 275 787
- FISCHER M ET AL: "ELECTROSTATICALLY DEFLECTABLE POLYISILICON TORSIONAL MIRRORS" SENSORS AND ACTUATORS A, Bd. A44, Nr. 1, 1. Juli 1994 (1994-07-01), Seiten 83-88, XP000469159 ISSN: 0924-4247 in der Anmeldung erwähnt
- HORNBECK L J: "DEFORMABLE-MIRROR SPATIAL LIGHT MODULATORS" SPATIAL LIGHT MODULATORS AND APPLICATIONS III, 7-8 AUGUST 1989, SAN DIEGO, Bd. 1150, 7. August 1989 (1989-08-07), Seiten 86-102, XP000351394

## Beschreibung

Die vorliegende Erfindung bezieht sich auf ein mikromechanisches Bauelement, das einen beweglichen Abschnitt, der in resonante Schwingungen versetzt werden kann, d.h. einen Schwingkörper, aufweist. Insbesondere bezieht sich die vorliegende Erfindung auf solche mikromechanische Bauelemente, bei denen eine Schwingung des Schwingkörpers aus der Chipebene heraus, d.h. vertikal zu der Chipebene erzeugt wird.

Die Funktionalität von bestimmten mikromechanischen Aktoren, beispielsweise solchen, die zur Ablenkung von Licht konzipiert sind, beruht auf der Auslenkung eines beweglichen Elements aus der Chipebene heraus. Das bewegliche Element ist dabei über eine Biege- oder Torsionsfeder mit dem übrigen Chip verbunden. Um die Auslenkung zu erreichen, ist es zum einen bekannt, den beweglichen Teil als Elektrode auszubilden und eine geeignete Gegenelektrode zu verwenden, so daß der Aktor durch ein elektrisches Drehmoment angetrieben wird. Zum anderen ist es bekannt, den beweglichen Teil in der Chipebene spulenartig mit Leiterbahnen zu versehen, so daß bei einem Stromfluß durch die Leiterbahnen im Magnetfeld ein magnetisches Drehmoment zum Antrieb genutzt werden kann.

Bei einer Vielzahl bekannter mikromechanischer Bauelemente ist die Gegenelektrode unterhalb der beweglichen Elektrode angeordnet, so daß beim Anlegen einer Spannung ein elektrisches Drehmoment zur Auslenkung aus der Chipebene genutzt werden kann. Zur Herstellung solcher Bauelemente gibt es zwei prinzipielle Lösungsansätze.

Bei dem ersten Ansatz wird zunächst auf das Substrat, das selbst als Gegenelektrode dienen kann, oder auf eine aus Metall strukturierte Gegenelektrode, die auf dem Substrat angeordnet ist, eine Opferschicht aufgebracht, die beispielsweise aus Siliziumdioxyd oder Fotolack besteht. Auf dieser Opferschicht wird dann aus einem geeigneten leitfähigen Material, beispielsweise Aluminium oder hochdotiertem Polysilizium, die bewegliche Elektrode gebildet. Abschliessend wird die Opferschicht entfernt. Bei M. Fischer u.a. "Electrostatically deflectable polysilicon torsional mirrors", in Sensors and Actuators A 44 (1994), S. 83 ff., ist ein Verfahren beschrieben, bei dem das Siliziumsubstrat die Gegenelektrode bildet, die Opferschicht aus Silizium besteht und die bewegliche Elektrode aus hochdotiertem Polysilizium hergestellt ist. Bei diesem Verfahren ist der Elektrodenabstand durch die Dicke der Opferschicht bestimmt, so daß durch dieses oder gleichartige Verfahren keine beliebig großen Elektrodenabstände realisiert werden können. Aktoren mit großer lateraler Ausdehnung und großem Ablenkwinkel können daher nicht gefertigt werden.

Der zweite prinzipielle Lösungsansatz basiert auf einem Hybridaufbau. Dabei werden Gegenelektrode und beweglicher Teil getrennt voneinander gefertigt und gegen Ende des Herstellungsprozesses zusammengefügt. Beispielsweise ist bei H. Löwe u.a. "Meßtechnische Anforderungen bei der Herstellung von Silizium-Mikrospiegeln", in Sensor 95 (Kongreßband), S. 631 ff., ein Aufbau beschrieben, der aus einem Rahmen aus Silizium, in dem der bewegliche Teil gelagert ist, und einer Trägerplatte, die die Gegenelektroden enthält, besteht. Mittels dieses Lösungsansatzes können große Elektrodenabstände realisiert werden. Jedoch leidet dieser Lösungsansatz unter dem Nachteil, daß entsprechend große Antriebsspannungen benötigt werden. Überdies macht die getrennte Fertigung von mikromechanischer Struktur und Trägerplatte den Prozeß aufwendig.

Bei den oben genannten Bauelementen, bei denen die Gegenelektrode unterhalb der beweglichen Elektrode angebracht ist, kann die Amplitude der Schwingung des beweglichen Teils naturgemäß den Abstand der Elektroden nicht überschreiten. Wird zur Vergrößerung der Amplitude ein größerer Elektrodenabstand verwendet, so muß andererseits die Antriebsspannung erhöht werden, um pro Schwingungszyklus die notwendige Energie einkoppeln zu können. Bei diesem Aufbau ist es somit nicht möglich, eine große Amplitude unter Verwendung geringer Antriebsspannungen zu erreichen.

Bei S. Miller u.a. "Scaling Torsional Cantilevers for Scanning Probe Microscope Arrays: Theory and Experiment", in Transducers '97 (1997) S. 445 ff., ist ein Aufbau beschrieben, bei dem eine Auslenkung des beweglichen Teils des mikromechanischen Bauelements aus der Chipebene ohne die Verwendung einer unterhalb der beweglichen Elektrode angeordnete Gegenelektrode möglich ist. Der Aufbau, der in dieser Schrift beschrieben ist, besitzt einen schwenkbar gelagerten beweglichen Balken, der durch kapazitive Aktoren angetrieben werden kann. Dazu ist der Balken mit einer Mehrzahl von beweglichen Interdigital-Elektroden versehen. Diese beweglichen Interdigital-Elektroden bilden zusammen mit feststehenden Interdigital-Elektroden die kapazitiven Aktoren, die den sogenannten elektrostatischen Kammantrieb-Schwebungseffekt ausnutzen. Dabei wirkt ein vertikal asymmetrisches Feld auf die beweglichen Elektroden, was eine vertikale Kraft zur Folge hat, die bewirkt, daß sich die beweglichen Elektroden, und somit der bewegliche Balken, von dem Substrat wegbewegen. Durch diesen Effekt können sowohl statische Verschiebungen als auch Schwingungen des Balkens bewirkt werden. Um die asymmetrische Feldverteilung, die eine Bewegung des Balkens aus der Chipebene bewirkt, zu erreichen, muß stets ein Substrat benachbart zu der beschriebenen Anordnung vorliegen, da sonst bei Vernachlässigung von Fertigungstoleranzen kein Drehmoment existiert, das eine Auslenkung aus der Chipebene erlaubt. Erst das Vorliegen des Substrats ändert bei geeigneter Potentialverteilung den Feldlinienverlauf derart, daß eine vertikale Kraftkomponente entsteht, die zur Auslenkung genutzt werden kann. Auch hierbei ist somit ein kleiner Abstand der beweglichen Elektroden zu dem Substrat essentiell, um die zur Bewegung senkrecht zur Chipebene notwendige Ausnutzung von Randeffekten zu ermöglichen. Auch hierbei sind somit keine großen Amplituden bei großer lateraler Ausdehnung des beweglichen Elements zu erreichen.

Bei N. Asada "Silicon Micromachined Two-Dimensional Galvano Optical Scanner" in IEEE Transactions on Magnetics (30) 6 (1994), S. 4647 ff., ist ein Antriebsprinzip beschrieben, das ein magnetisches Moment ausnutzt. Dabei sind auf das bewegliche Element eines Torsionsaktors lateral spulenförmige Leiterbahnen aufgebracht, so daß bei einem Stromfluß im Magnetfeld ein magnetisches Drehmoment zum Antrieb entsteht. Bei diesem Antriebsprinzip wird die Einschränkung der Amplitude aufgrund der Geometrie der Elektroden umgangen. Jedoch ist durch das magnetische Moment lediglich ein geringes Drehmoment realisierbar, so daß selbst im Resonanzfall nur Amplituden von weniger als 3° erreicht werden. Zudem ist der Aufbau aufgrund der Verwendung eines separat gefertigten Permanentmagneten relativ aufwendig.

Die Aufgabe der vorliegenden Erfindung besteht darin, ein mikromechanisches Bauelement mit einem Schwingkörper zu schaffen, bei dem eine große Auslenkung des Schwingkörpers aus der Chipebene unter Verwendung geringer Spannungen möglich ist.

Diese Aufgabe wird durch ein mikromechanisches Bauelement gemäß Anspruch 1 gelöst.

Die vorliegende Erfindung schafft ein mikromechanisches Bauelement mit einer Rahmenschicht, und einem Schwingkörper, der durch eine Aufhängungseinrichtung in einer die Rahmenschicht durchdringenden Ausnehmung derart gelagert ist, daß der Schwingkörper vertikal zur Rahmenschichtebene um eine Schwingachse schwenkbar ist. Zumindest eine Seitenfläche des Schwingkörpers, die im wesentlichen senkrecht zur Rahmenschichtebene ist, ist bezüglich zumindest einer inneren Seitenfläche der Ausnehmung derart angeordnet, daß eine zwischen denselben gebildete Kapazität durch eine Schwingung des Schwingkörpers variiert, derart, daß durch periodisches Verändern einer Spannung, die zwischen die Rahmenschicht und den Schwingkörper angelegt ist, eine Schwingung des Schwingkörpers um die Schwingachse erzeugbar ist. Ferner ist ein Trägersubstrat zum Halten der Rahmenschicht vorgesehen, wobei das Trägersubstrat derart ausgebildet ist, daß dasselbe einen verglichen mit dem Einfluß der Spannung zwischen Rahmenschicht und Schwingkörper vernachlässigbaren physikalischen Einfluß auf die Erzeugung der Schwingung des Schwingkörpers hat. Ferner sind Mittel zum periodischen Verändern einer Spannung, die zwischen die Rahmenschicht und den Schwingkörper zur Erzeugung einer Schwingung des Schwingkörpers um die Schwingachse angelegt wird vorgesehen.

Das erfindungsgemäße mikromechanische Bauelement basiert auf einem neuartigen elektrostatischen Antriebsprinzip, das es ermöglicht, resonante Biege- und Torsionsschwingungen beweglicher Teile mikromechanischer Bauelemente zu erzeugen, wobei die Bewegung des Schwingkörpers aus der Chipebene heraus erfolgt, und die erreichbare Amplitude nicht durch eine Gegenelektrode eingeschränkt ist. Bei diesem Antriebsprinzip dient die innere Seitenfläche der Rahmenschicht, in der der Schwingkörper gelagert ist, als Gegenelektrode, wobei diese innere Seitenfläche direkt neben einer Seitenfläche des Schwingkörpers, die als bewegliche Elektrode dient, angeordnet ist, so daß sich eine Art Plattenkondensator ergibt, der aus den sich gegenüberliegenden Seitenflächen gebildet ist. Somit verläuft das elektrische Feld parallel zur Chipebene.

Die zur Schwingung des Schwingkörpers notwendige Energieeinkopplung erfolgt über diese Kapazität. Die Energieeinkopplung erfolgt über das Anlegen einer Spannung zwischen der beweglichen Elektrode und der Gegenelektrode, wobei das Erhöhen und Verringern der elektrischen Spannung vorzugsweise derart erfolgt, daß über eine Schwingperiode gemittelt Energie eingekoppelt werden kann. Das Erniedrigen oder Abschalten der elektrischen Spannung zwischen beweglicher Elektrode und Gegenelektrode erfolgt vorzugsweise während des Nulldurchgangs oder in unmittelbarer Nähe des Nulldurchgangs der Schwingung. Dieser Nulldurchgang wird vorzugsweise durch ein optisches Verfahren, durch ein Erfassen des Lade-/Entladestroms der auslenkungswinkelabhängigen Kapazität oder durch eine Bestimmung der auslenkungswinkelabhängigen Kapazität detektiert.

Um ein Anschwingen des Schwingkörpers zu erleichtern, können Asymmetrien, die durch den Herstellungsprozeß oder durch das Anbringen einer weiteren Elektrode oberhalb der Gegenelektrode erzeugt werden, vorgesehen sein, so daß beim Anlegen einer elektrischen Spannung geeigneter Frequenz ein periodisches Drehmoment erzeugt wird, das den Schwingkörper zu Schwingungen anregt. Die einkoppelbare Energie nimmt dabei mit zunehmender Auslenkung zu. Wird der Nulldurchgang jeweils detektiert und ein Generator damit synchronisiert, so wird das System mit seiner Resonanzfrequenz mit optimaler Phasenlage angeregt. Somit kann gemäß der vorliegenden Erfindung auf Elektroden, die geometrisch bedingt die Amplitude der Schwingung einschränken, vollständig verzichtet werden. Ferner kann das erfindungsgemäße Bauelement ohne weiteres unter Verwendung bekannter Verfahren der Oberflächenmikromechanik hergestellt werden.

Die vorliegende Erfindung schafft folglich ein mikromechanisches Bauelement mit einem einfachen Aufbau, das eine große Auslenkung des Schwingkörpers unter Verwendung einer vergleichsweise geringen Treiberspannung ermöglicht. Diese Vorteile werden erfindungsgemäß erhalten, da eine oder mehrere Seitenflächen des Schwingkörpers, die als bewegliche Elektrode dienen und senkrecht zu der Ebene des Trägersubstrats angeordnet sind, mit einer oder mehreren inneren Seitenflächen der Ausnehmung in der Rahmenschicht, in der der Schwingkörper gelagert ist, zusammenwirken, um eine Schwingung des Schwingkörpers zu ermöglichen, wobei keine darunterliegende Substratoberfläche erforderlich ist, die die Schwingungsamplitude begrenzen würde.

Bevorzugte Ausführungsbeispiele der vorliegenden Erfindung werden nachfolgende bezugnehmend auf den beiliegenden Zeichnungen näher erläutert. Es zeigen:
- Fig. 1: eine schematische Querschnittsansicht eines Ausführungsbeispiels des erfindungsgemäßen mikromechanischen Bauelements, wobei der Schwingkörper in Ruhelage ist;
- Fig. 2: eine schematische Querschnittsansicht des in Fig. 1 dargestellten mikromechanischen Bauelements, wobei der Schwingkörper im ausgelenkten Zustand ist; und
- Fig. 3: eine schematische Querschnittsansicht eines weiteren Ausführungsbeispiels eines mikromechanischen Bauelements gemäß der vorliegenden Erfindung, wobei der Schwingkörper in Ruhelage ist.

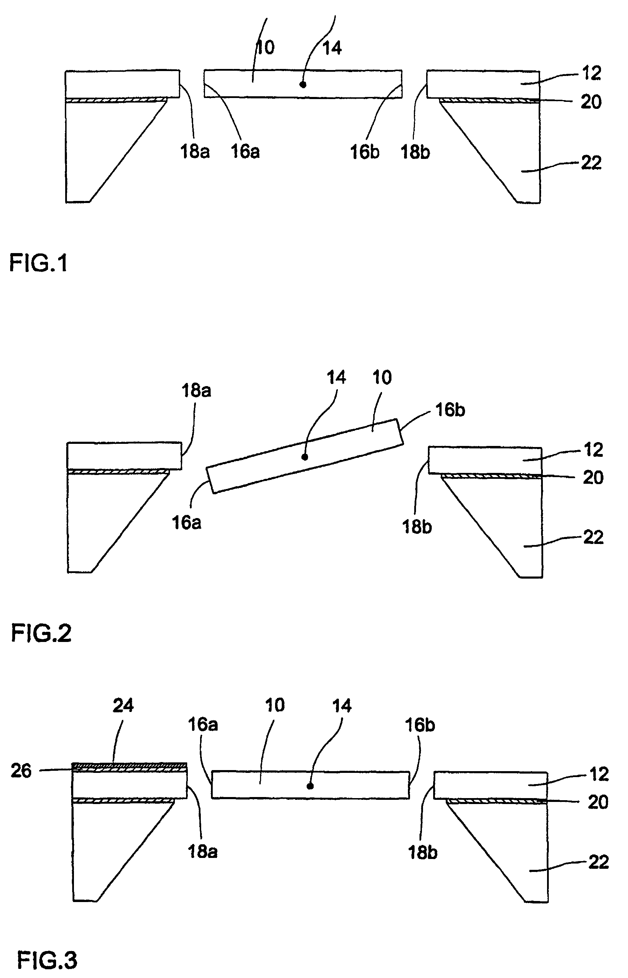

Wie in Fig. 1 gezeigt ist, weist das erfindungsgemäße mikromechanische Bauelement einen Schwingkörper 10, eine Rahmenschicht 12 und eine Aufhängungsvorrichtung 14 auf. Der Schwingkörper 10, die Rahmenschicht 12 und die Aufhängungsvorrichtung 14 sind vorzugsweise einstückig aus einer Siliziumschicht gebildet. Dabei ist die Siliziumschicht derart strukturiert, daß dieselbe eine Ausnehmung aufweist, in der der schwingkörper 10 angeordnet ist, wobei der Schwingkörper 10 durch die Aufhängungsvorrichtung 14, bei der es sich vorzugsweise um Siliziumfedern, die in der Siliziumschicht strukturiert sind, handelt, in der Ausnehmung gelagert ist. Somit liegen Seitenflächen 16a und 16b des Schwingkörpers 10 inneren Seitenflächen 18a und 18b der Siliziumschicht, d.h. der Rahmenschicht 12 nach dem Strukturieren der Siliziumschicht, derart gegenüber, daß zwischen denselben eine Art Plattenkondensator gebildet ist. Die Aufhängungsvorrichtung 14, die die Torsionsarme darstellt, um die der Schwingkörper 10 schwenkbar ist, verbindet den Schwingkörper 10 an den zwei Seiten desselben, die senkrecht zu den Seitenflächen 16a und 16b sind, derart mit der Rahmenschicht 12, daß die Seitenflächen 16a und 16b, die als bewegliche Elektroden zum Antreiben des Schwingkörpers 10 dienen, im wesentlichen senkrecht zu der Ebene des Trägersubstrats sind.

Bei dem in Fig. 1 dargestellten Ausführungsbeispiel wurde das mikromechanische Bauelement aus einer SOI-Substrat-Struktur hergestellt, wobei die Siliziumschicht, in der die Rahmenschicht 12 und der Schwingkörper 10 strukturiert sind, mittels einer Isolationsschicht 20 an einem Trägersubstrat 22 angebracht ist. Das Trägersubstrat 22 und die Isolationsschicht 20 sind unterhalb der Ausnehmung in der Siliziumschicht, in der der Schwingkörper 10 gebildet ist, beseitigt, so daß die Amplitude der Bewegung des Schwingkörpers 10 durch dieselben nicht beeinträchtigt ist. Ferner ergibt sich durch das Trägersubstrat 22 eine Haltevorrichtung, durch die das mikromechanische Bauelement an seinem Einsatzort angebracht werden kann.

Die Herstellung des in Fig. 1 dargestellten mikromechanischen Bauelements kann mittels bekannter Verfahren der Oberflächenmikromechanik durchgeführt werden. Es sind keine weiteren Aufbau- oder Verbindungstechniken bzw. Schritte notwendig, um die Funktionalität des mikromechanischen Bauelements zu gewährleisten. Dabei wird bei einem bevorzugten Verfahren zum Herstellen des erfindungsgemäßen mikromechanischen Bauelements von einem SOI-Substrat ausgegangen, wobei mittels bekannter Verfahren die Epitaxieschicht, die vorzugsweise eine hochdotierte Siliziumschicht ist, strukturiert wird, um den Schwingkörper 10, die Aufhängung 14 und die Rahmenschicht 12 zu definieren. Bei dieser Strukturierung kann die Isolationsschicht 20, die vorzugsweise aus Siliziumdioxyd besteht, als Ätzstopp dienen. Nach dieser Strukturierung der Epitaxieschicht wird ein Rückseitenätzprozeß durchgeführt, um das Trägersubstrat 22 und die Isolationsschicht zumindest unterhalb des Schwingkörpers 10 zu entfernen, um dadurch zu gewährleisten, daß die Bewegungsamplitude des Schwingkörpers 10 durch diese Schichten nicht eingeschränkt ist.

Nachfolgend wird bezugnehmend auf die Fig. 1 und 2 die Funktionsweise des erfindungsgemäßen mikromechanischen Bauelements erläutert. Es sei zunächst davon ausgegangen, daß der über die zwei Torsionsarme, die die Aufhängungsvorrichtung 14 bilden, aufgehängte Schwingkörper bereits schwingt. Im nicht ausgelenkten Zustand, der in Fig. 1 dargestellt ist, besitzen die Systeme aus beweglicher Elektrode 16a bzw. 16b und Gegenelektrode 18a bzw. 18b jeweils ihre maximale Kapazität C₀. Diese Kapazität wird, wie bereits oben erläutert wurde, jeweils aus einer Seitenfläche 18a bzw. 18b der Ausnehmung in der Rahmenschicht 12, die als Gegenelektrode wirkt, und einer Seitenfläche 16a bzw. 16b des Schwingkörpers 10, die als bewegliche Elektrode wirkt, gebildet. Bei dem dargestellten Ausführungsbeispiel liegen sich im Ruhezustand des Schwingkörpers jeweils zwei dieser Elektroden direkt gegenüber, so daß zwischen denselben die maximale Kapazität C₀ gebildet ist.

Mit zunehmender Auslenkung, wie in Fig. 2 dargestellt ist, nimmt die Kapazität zwischen den Elektroden 16a und 18a bzw. 16b und 18b ab. Während der Schwingung des Schwingkörpers 10 stellt das System somit eine auslenkungswinkelabhängige Kapazität dar. Schwingt der Schwingkörper 10 auf seine Ruhelage, die in Fig. 1 dargestellt ist, zu, so wirkt aufgrund der Kapazitätsvergrößerung zwischen den jeweiligen Elektroden 16a und 18a bzw. 16b und 18b ein beschleunigendes Moment auf den Schwingkörper 10, wenn zwischen den jeweiligen Elektroden eine elektrische Spannung anliegt. bei Erreichen der Ruhelage durch den Schwingkörper 10, d.h. im Nulldurchgang desselben, wird diese zwischen dem Schwingkörper 10 und der Rahmenschicht 12 anliegende Spannung auf einen niedrigeren Wert geschaltet oder ausgeschaltet, so daß beim Herausschwingen aus der Ruhelage höchstens ein geringes elektrisches Drehmoment bremsend wirkt.

Der oben beschriebene Vorgang findet in jeder Halbperiode der Schwingung des Schwingkörpers 10 statt. Die einkoppelbare Energie pro Halbperiode ist proportional zur Kapazitätsänderung. Unter Vernachlässigung von Randeffekten nimmt die Kapazität auf Null ab, sobald der Schwingkörper 10 eine Auslenkungsamplitude aufweist, die größer als die Elektrodenhöhe, d.h. größer als die Höhe der Seitenfläche 16a bzw. 16b desselben, ist. Somit kann pro Schwingungsperiode maximal die Energie E=C₀·U² eingekoppelt werden, wobei U die Spannung zwischen den jeweiligen Elektroden 16a und 18a bzw. 16b und 18b ist, die im Nulldurchgang ausgeschaltet wird.

Bei bevorzugten Ausführungsbeispielen der vorliegenden Erfindung sind die beweglichen Elektroden und die jeweils gegenüberliegenden festen Elektroden derart ausgestaltet, daß eine hohe Energieeinkopplung möglich ist. Dies kann beispielsweise durch eine kammförmige oder meanderförmige Ausgestaltung der Elektroden erreicht werden.

Die Synchronisation des Abschaltzeitpunktes der elektrischen Spannung mit dem Nulldurchgang der Schwingung kann entweder über ein optisches Verfahren, beispielsweise durch Abtastung mittels eines Laserstrahls, durch den bei der Kapazitätsänderung auftretenden Lade/Entladestrom oder durch eine Bestimmung der momentanen Kapazität realisiert werden.

Alternativ kann die Schwingung auch durch eine Wechselspannung geeigneter, aber fester Frequenz aufrechterhalten werden. Da hierbei allerdings die Phasenlage im allgemeinen ungünstig ist, ist die Energieeinkopplung geringer. Die Anregungsfrequenz muß dabei nicht der mechanischen Resonanzfrequenz des Schwingkörpers entsprechen. Im allgemeinen wird die Anregungsfrequenz das doppelte der Schwingungsfrequenz betragen, da der Schwingkörper den Nulldurchgang zweimal pro Periode passiert.

Das Anschwingen des Schwingkörpers des erfindungsgemäßen mikromechanischen Bauelements kann durch verschiedene Möglichkeiten erreicht werden, wobei jeweils eine anfängliche Auslenkung des Schwingkörpers 10 erforderlich ist. Eine solche Auslenkung kann durch eine Spannung erzeugt werden, wenn der Schwingkörper im Herstellungsprozess asymmetrisch angeordnet wird, indem bewirkt wird, daß derselbe in der Ruhelage gegenüber der Rahmenschicht eine Verkippung aufweist. Eine solche Verkippung könnte beispielsweise erzeugt werden, indem die Aufhängungseinrichtung derart realisiert wird, daß eine bestimmte mechanische Vorspannung auf den Schwingkörper 10 ausgeübt wird.

Ein alternatives Ausführungsbeispiel zum Erzeugen der oben genannten Asymmetrie ist in Fig. 3 dargestellt. Bei diesem Ausführungsbeispiel des mechanischen Bauelements ist benachbart zu der Gegenelektrode 18a auf der Rahmenschicht 12 eine weitere Elektrode 24 vorgesehen, die durch eine Isolationsschicht 26 von der Rahmenschicht 12 isoliert ist. Die Isolationsschicht 26 kann beispielsweise eine Glasschicht sein, während die zusätzliche Elektrode 24 aus Metall bestehen kann.

Diese Elektrode 24 stört die Symmetrie des Aufbaus, da diesselbe die Kapazität zwischen der beweglichen Elektrode 16a und der Gegenelektrode 18a beeinflußt, d.h. im allgemeinen erhöht. Somit ermöglicht das Anbringen der Gegenelektrode 24 oberhalb der Gegenelektrode an einer Seite des beweglichen Elements, wie in Fig. 3 dargestellt ist, ein Anschwingen des Schwingkörpers 10.

Bezugnehmend auf ein bevorzugtes Ausführungsbeispiel der vorliegenden Erfindung wurde ein mikromechanisches Bauelement beschrieben, bei dem der Schwingkörper durch die Aufhängungseinrichtung derart in der Rahmenschicht gelagert ist, daß die erzeugbare Schwingung eine Torsionsschwingung ist. Alternativ ist die vorliegende Erfindung jedoch auch auf Bauelemente anwendbar, bei denen der Schwingkörper durch die Aufhängungseinrichtung einseitig in der Rahmenschicht eingespannt ist, derart, daß die erzeugbare Schwingung eine Biegeschwingung ist.

Die vorliegende Erfindung schafft somit ein mikromechanisches Bauelement, das auf einem Antriebsprinzip beruht, das die Erzeugung von resonanten Biege- und Torsionsschwingungen eines Schwingkörpers ohne Einschränkung der Amplitude durch die Geometrie des Aufbaus ermöglicht. Das erfindungsgemäße mikromechanische Bauelement besitzt einen äußerst einfachen Aufbau, und ist zudem mittels bekannter Verfahren der Oberflächenmikromechanik ohne zusätzliche Verbindungs-Techniken oder -Schritte herstellbar.

## Patentansprüche

1. Mikromechanisches Bauelement mit folgenden Merkmalen:
einer Rahmenschicht (12),
einem Schwingkörper (10), der durch eine Aufhängungseinrichtung (14) in einer die Rahmenschicht (12) durchdringenden Ausnehmung derart gelagert ist, daß der Schwingkörper (10) vertikal zur Rahmenschichtebene um eine Schwingachse schwenkbar ist,
wobei zumindest eine Seitenfläche (16a, 16b) des Schwingkörpers (10), die im wesentlichen senkrecht zur Rahmenschichtebene ist, bezüglich zumindest einer inneren Seitenfläche (18a, 18b) der Ausnehmung derart angeordnet ist, daß eine zwischen denselben gebildete Kapazität durch eine Schwingung des Schwingkörpers (10) variiert, derart, daß durch periodisches Verändern einer Spannung, die zwischen die Rahmenschicht (12) und den Schwingkörper (10) angelegt ist, eine Schwingung des Schwingkörpers (10) um die Schwingachse erzeugbar ist,
einem Trägersubstrat (22) zum Halten der Rahmenschicht (12), wobei das Trägersubstrat (22) derart ausgebildet ist, daß dasselbe einen verglichen mit dem Einfluß der Spannung zwischen Rahmenschicht (12) und Schwingkörper (10) vernachlässigbaren physikalischen Einfluß auf die Erzeugung der Schwingung des Schwingkörpers (10) hat, und
Mitteln zum periodischen Verändern einer Spannung, die zwischen die Rahmenschicht (12) und den Schwingkörper (10) zur Erzeugung einer Schwingung des Schwingkörpers (10) um die Schwingachse angelegt wird.

2. Mikromechanisches Bauelement nach Anspruch 1, bei dem die Rahmenschicht (12), die Aufhängung (14) und der Schwingkörper (10) einstückig ausgebildet sind.

3. Mikromechanisches Bauelement nach Anspruch 2, bei dem die Rahmenschicht (12), die Aufhängung (14) und der Schwingkörper (10) aus einer hochdotierten Siliziumschicht gebildet sind.

4. Mikromechanisches Bauelement nach Anspruch 3, bei dem die hochdotierte Siliziumschicht mittels einer Isolationsschicht (20) auf einem Trägersubstrat (22) angeordnet ist, wobei die Isolationsschicht (20) und das Trägersubstrat (22) zumindest im Bereich des Schwingkörpers (10) entfernt sind.

5. Mikromechanisches Bauelement nach einem der Ansprüche 1 bis 4, bei dem der Schwingkörper durch die Aufhängungseinrichtung einseitig in der Rahmenschicht eingespannt ist, derart, daß die erzeugbare Schwingung eine Biegeschwingung ist.

6. Mikromechanisches Bauelement nach einem der Ansprüche 1 bis 4, bei dem der Schwingkörper (10) durch die Aufhängungseinrichtung (14) derart in der Rahmenschicht gelagert ist, daß die erzeugbare Schwingung eine Torsionsschwingung ist.

7. Mikromechanisches Bauelement nach einem der Ansprüche 1 bis 6, bei dem Mittel vorgesehen sind, um eine Asymmetrie des Aufbaus aus Rahmenschicht (12), Schwingkörper (10 und Aufhängungsvorrichtung (14) zu liefern, um ein Anschwingen des Schwingkörpers (10) zu ermöglichen.

8. Mikromechanisches Bauelement nach Anspruch 7, bei dem die Asymmetrie durch eine auf der Rahmenschicht (12) benachbart zu einer inneren Seitenfläche (18a) der Ausnehmung angeordnete, von der Rahmenschicht (12) isolierte Elektrode (24) bewirkt wird.

9. Mikromechanisches Bauelement nach Anspruch 7, bei dem die Asymmetrie durch einen asymmetrischen Aufbau des Schwingkörpers und/oder der Rahmenschicht bewirkt wird.

10. Mikromechanisches Bauelement nach Anspruch 7, bei dem die Asymmetrie dadurch bewirkt wird, daß der Schwingkörper in einer Ruhelage desselben, wenn keine Spannung zwischen Rahmenschicht und Schwingkörper angelegt ist, relativ zu der Rahmenschicht um die Schwingachse verkippt ist.

11. Mikromechanisches Bauelement nach einem der Ansprüche 1 bis 10, mit einer Steuervorrichtung, die das Verändern der zwischen der Rahmenschicht (12) und dem Schwingkörper (10) anliegenden Spannung bewirkt, wobei die Steuervorrichtung die Spannung jeweils im wesentlichen bei einem Nulldurchgang der Schwingung des Schwingkörpers (10) auf einen minimalen Wert absenkt.

12. Mikromechanisches Bauelement nach Anspruch 11, bei dem die Steuervorrichtung die Spannung bei einem Nulldurchgang der Schwingung des Schwingkörpers (10) jeweils abschaltet.

13. Mikromechanisches Bauelement nach Anspruch 11 oder 12, bei dem die Steuervorrichtung die Spannung zwischen der Rahmenschicht (12) und dem Schwingkörper (10) jeweils bei einer maximalen Auslenkung des Schwingkörpers (10) auf einen maximalen Wert erhöht.

14. Mikromechanisches Bauelement nach einem der Ansprüche 11 bis 13, bei dem die Steuervorrichtung ferner Mittel zum Erfassen der Nulldurchgänge der Schwingung des Schwingkörpers (10) aufweist.

15. Mikromechanisches Bauelement nach Anspruch 14, bei dem die Mittel zum Erfassen einen optischen Detektor aufweisen.

16. Mikromechanisches Bauelement nach Anspruch 14, bei dem die Mittel zum Erfassen zumindest eine Einrichtung zum Detektieren der Kapazität zwischen einer Seitenfläche (16a, 16b) des Schwingkörpers (10) und einer zugeordneten inneren Seitenfläche (18a, 18b) der Ausnehmung aufweisen.

17. Mikromechanisches Bauelement nach Anspruch 14, bei dem die Mittel zum Erfassen zumindest eine Einrichtung zum Detektieren eines Lade/Entladestroms der Kapazität zwischen einer Seitenfläche des Schwingkörpers und einer zugeordneten inneren Seitenfläche der Ausnehmung aufweisen.

18. Mikromechanisches Bauelement nach einem der Ansprüche 11 bis 17, bei dem die Steuervorrichtung eine periodische Spannung geeigneter Frequenz zwischen Rahmenschicht (12) und Schwingkörper (10) anlegt.

## Claims

1. A micromechanical component comprising:
a frame layer (12),
an oscillating body (10) which, with the aid of a suspension means (14), is supported in an opening penetrating the frame layer (12), in such a way that the oscillating body (10) is adapted to be pivoted about an axis of oscillation vertically to the frame layer plane,
at least one oscillating-body (10) lateral surface (16a, 16b), which extends substantially at right angles to the frame layer plane, being arranged in relation to at least one inner lateral surface (18a, 18b) of the opening in such a way that a capacitance formed therebetween is varied by an oscillation of the oscillating body (10) in such a way that an oscillation of the oscillating body (10) about the axis of oscillation can be generated by periodically varying a voltage applied between the frame layer (12) and the oscillating body (10),
a supporting substrate (22) for holding the frame layer (12), said supporting substrate (22) being implemented such that, in comparison with the influence of the voltage applied between the frame layer (12) and the oscillating body (10), said supporting substrate (22) has a negligible physical influence on the generation of the oscillation of the oscillating body (10), and
means for periodically varying a voltage applied between the frame layer (12) and the oscillating body (10) for generating an oscillation of the oscillating body (10) about the axis of oscillation.

2. A micromechanical component according to claim 1, wherein the frame layer (12), the suspension (14) and the oscillating body (10) are formed integrally with one another.

3. A micromechanical component according to claim 2, wherein the frame layer (12), the suspension (14) and the oscillating body (10) are made of a heavily doped silicon layer.

4. A micromechanical component according to claim 3, wherein the heavily doped silicon layer is arranged on a supporting substrate (22) by means of an insulating layer (20), said insulating layer (20) and said supporting substrate (22) being removed at least in the area of the oscillating body (10).

5. A micromechanical component according to one of the claims 1 to 4, wherein the oscillating body is fixed in the frame layer with the aid of the suspension means on one side thereof in such a way that the oscillation which can be produced is a flexural oscillation.

6. A micromechanical component according to one of the claims 1 to 4, wherein the oscillating body (10) is supported with the aid of the suspension means (14) in the frame layer in such a way that the oscillation which can be produced is a torsional oscillation.

7. A micromechanical component according to one of the claims 1 to 6, wherein means are provided for providing an asymmetry of the set-up comprising the frame layer (12), the oscillating body (10) and the suspension means (14), so as to permit an oscillation build-up of the oscillating body (10).

8. A micromechanical component according to claim 7, wherein said asymmetry is caused by an electrode (24) arranged on the frame layer (12) adjacent to an inner lateral surface (18a) of the opening and insulated from said frame layer (12).

9. A micromechanical component according to claim 7, wherein the asymmetry is caused by an asymmetrical structural design of the oscillating body and/or the frame layer.

10. A micromechanical component according to claim 7, wherein the asymmetry is caused in that, at a position of rest of the oscillating body, when no voltage is applied between the frame layer and the oscillating body, said oscillating body is tilted about the axis of oscillation relative to the frame layer.

11. A micromechanical component according to one of the claims 1 to 10, comprising a control device which causes a variation of the voltage applied between the frame layer (12) and the oscillating body (10), wherein said control device reduces the voltage to a minimum value substantially at each zero passage of the oscillation of the oscillating body (10).

12. A micromechanical component according to claim 11, wherein said control device switches off the voltage at each zero passage of the oscillation of the oscillating body (10).

13. A micromechanical component according to claim 11 or 12, wherein the control device increases the voltage applied between the frame layer (12) and the oscillating body (10) to a maximum value at each maximum deflection of the oscillating body (10).

14. A micromechanical component according to one of the claims 11 to 13, wherein said control device additionally comprises means for detecting the zero passages of the oscillation of the oscillating body (10).

15. A micromechanical component according to claim 14, wherein said detection means comprise an optical detector.

16. A micromechanical component according to claim 14, wherein said detection means comprise at least one means for detecting the capacitance between a lateral surface (16a, 16b) of the oscillating body (10) and an associated lateral surface (18a, 18b) of the opening.

17. A micromechanical component according to claim 14, wherein said detection means comprise at least one means for detecting a charge/discharge current of the capacitance between a lateral surface of the oscillating body and an associated inner lateral surface of the opening.

18. A micromechanical component according to one of the claims 11 to 17, wherein said control means applies a periodic voltage of suitable frequency between the frame layer (12) and the oscillating body (10).

## Revendications

1. Composant micromécanique, aux caractéristiques suivantes :
une couche de cadre (12)
un corps oscillant (10) monté par l'intermédiaire d'un dispositif de suspension (14), dans un évidement traversant la couche de cadre (12), de telle sorte que le corps oscillant (10) puisse pivoter autour d'un achse de pivotement, verticalement par rapport au plan de la couche de cadre,
au moins une face latérale (16a, 16b) du corps oscillant (10), qui est sensiblement perpendiculaire au plan de la couche de cadre, étant disposée par rapport à au moins une face latérale intérieure (18a, 18b) de l'évidemment de telle sorte qu'une capacité formée entre ces dernières varie par suite de l'oscillation du corps oscillant (10), de sorte que par la variation périodique d'une tension appliquée entre la couche de cadre (12) et le corps oscillant (10) puisse être générée une oscillation du corps oscillant (10) autour de l'axe d'oscillation,
un substrat support (22) destiné à porter la couche de cadre (12), le substrat support (22) étant réalisé de telle sorte que celui-ci ait, comparé à l'influence de la tension entre la couche de cadre (12) et le corps oscillant (10), une influence physique négligeable sur la génération de l'oscillation du corps oscillant (10), et
des moyens destinés à faire varier périodiquement une tension appliquée entre la couche de cadre (12) et le corps oscillant (10) pour générer une oscillation du corps oscillant (10) autour de l'axe d'oscillation.

2. Composant micromécanique selon la revendication 1, dans lequel la couche de cadre (12), la suspension (14) et le corps oscillant (10) sont réalisés d'une seule pièce.

3. Composant micromécanique selon la revendication 2, dans lequel la couche de cadre (12), la suspension (14) et le corps oscillant (10) sont réalisés en une couche de silicium hautement dopée.

4. Composant micromécanique selon la revendication 3, dans lequel la couche de silicium hautement dopée est disposée sur un substrat de support (22) au moyen d'une couche isolante (20), la couche isolante (20) et le substrat de support (22) étant éliminés au moins à l'endroit du corps oscillant (10).

5. Composant micromécanique selon l'une des revendications 1 à 4, dans lequel le corps oscillant est, par l'intermédiaire du dispositif de suspension, tendu d'un côté dans la couche de cadre, de sorte que l'oscillation pouvant être générée est une oscillation de flexion.

6. Composant micromécanique selon l'une des revendications 1 à 4, dans lequel le corps oscillant (10) est, par l'intermédiaire du dispositif de suspension, monté dans la couche de cadre de telle sorte que l'oscillation pouvant être générée est une oscillation de torsion.

7. Composant micromécanique selon l'une des revendications 1 à 6, dans lequel sont prévus des moyens pour créer une asymétrie de la construction composée de la couche de cadre (12), du corps oscillant (10) et du dispositif de suspension (14), afin de permettre une amorce d'oscillation du corps oscillant (10).

8. Composant micromécanique selon la revendication 7, dans lequel l'asymétrie est créée par une électrode (24) disposée sur la couche de cadre (12), à proximité d'une face latérale intérieure (18a) de l'évidement, et isolée de la couche de cadre (12).

9. Composant micromécanique selon la revendication 7, dans lequel l'asymétrie est créée par une construction asymétrique du corps oscillant et/ou de la couche de cadre.

10. Composant micromécanique selon la revendication 7, dans lequel l'asymétrie est créée par le fait que le corps oscillant (10) est, en position de repos de celui-ci, lorsqu'il n'est pas appliqué de tension entre la couche de cadre et le corps oscillant, basculé, autour de l'axe d'oscillation, par rapport à la couche de cadre.

11. Composant micromécanique selon l'une des revendications 1 à 10, avec un dispositif de réglage provoquant la variation de la tension appliquée entre la couche de cadre (12) et le corps oscillant (10), le dispositif de réglage abaissant la tension, substantiellement à chaque passage à zéro de l'oscillation du corps oscillant (10), à une valeur minimale.

12. Composant micromécanique selon la revendication 11, dans lequel le dispositif de réglage coupe la tension à chaque passage à zéro de l'oscillation du corps oscillant (10).

13. Composant micromécanique selon la revendication 11 ou 12, dans lequel le dispositif de réglage élève la tension entre la couche de cadre (12) et le corps oscillant (10), à chaque déviation maximale du corps oscillant (10), à une valeur maximale.

14. Composant micromécanique selon l'une des revendications 11 à 13, dans lequel le dispositif de réglage présente, par ailleurs, des moyens pour capter les passages à zéro de l'oscillation du corps oscillant (10).

15. Composant micromécanique selon la revendication 14, dans lequel les moyens pour capter présentent un capteur optique.

16. Composant micromécanique selon la revendication 14, dans lequel les moyens pour capter présentent au moins un dispositif pour détecter la capacité entre une face latérale (16a, 16b) du corps oscillant (10) et une face latérale intérieure (18a, 18b) associée de l'évidemment.

17. Composant micromécanique selon la revendication 14, dans lequel les moyens pour capter présentent au moins un dispositif pour détecter un courant de charge/décharge de la capacité entre une face latérale du corps oscillant et une face latérale intérieure associée de l'évidemment.

18. Composant micromécanique selon l'une des revendications 11 à 17, dans lequel le dispositif de réglage applique une tension périodique de fréquence appropriée entre la couche de cadre (12) et le corps oscillant (10).
